# FASCICULE DE BREVET EUROPEEN

(11) **EP 2 645 150 B1**
(45) Date de publication et mention de la délivrance du brevet: **24.09.2014**
(21) Numéro de dépôt: 13160650.1
(22) Date de dépôt: 22.03.2013
(51) Int. Cl.: G02B 27/01, B60R 1/10, B64D 47/00, B60R 11/02, B60R 11/00

(54) **Système de visualisation dit "tête haute" à combineur optique comportant un pare soleil amovible**
Head-Up-Display-System mit optischem Kopplungsgerät, das eine entfernbare Sonnenblende umfasst
Heads-up display system with optical combiner comprising a removable visor

(30) Priorité: 29.03.2012 FR 1200943
(43) Date de publication de la demande: 02.10.2013
(73) Titulaire: Thales, 92200 Neuilly Sur Seine (FR)
(72) Inventeur: Meyre, Nicolas, 33187 LE HAILLAN Cedex (FR); Moreaud, Erick, 33187 LE HAILLAN Cedex (FR); Rooryck, Maxime, 33187 LE HAILLAN Cedex (FR)
(74) Mandataire: Bréda, Jean-Marc

(56) Documents cités:
- EP-A1- 0 500 378
- JP-A- 5 104 980
- US-A- 4 711 512
- US-A- 5 007 711
- US-B2- 7 893 890

## Description

Le domaine de l'invention est celui des systèmes de visualisation dits « Tête Haute » comportant un pare-soleil amovible. Ces systèmes sont également connus sous la terminologie anglo-saxonne de « Head-Up Display » ou « HUD ». Ces systèmes sont principalement utilisés en aéronautique.

Un système de visualisation dit « Tête Haute » comporte essentiellement un afficheur, un système optique et un élément optique appelé combineur optique ou mélangeur optique. Le combineur optique est généralement une lame de verre plane ou courbe semi-réfléchissante. L'ensemble permet de donner à l'utilisateur une image collimatée en superposition sur le paysage extérieur. Dans le cas d'applications aéronautiques, lorsque le système de visualisation est monté à l'intérieur d'un cockpit d'aéronef, cette image peut comporter diverses informations sur le pilotage ou la navigation de l'aéronef.

Sous certaines conditions d'ensoleillement, il est nécessaire de diminuer la luminance du paysage extérieur comme décrit dans US 7 893 890 de façon à garder un contraste suffisant à l'image affichée, la luminance de l'image étant nécessairement limitée par les performances des afficheurs. La façon la plus simple de faire est d'ajouter un « pare-soleil » amovible sur la face du combineur situé entre le combineur et le pare-brise de l'appareil. Le « pare-soleil » est une lame mince courbe, transparente et teintée.

Actuellement, la fixation du pare-soleil se fait au moyen de plusieurs systèmes de fixation situés sur le pourtour du pare-soleil. L'opération qui est effectuée par le pilote demande un certain temps et nécessite ses deux mains.

Le système de fixation d'un pare-soleil sur un combineur optique selon l'invention ne présente pas ces inconvénients. Il ne comporte que deux attaches de fixation et permet de monter, de positionner et de fixer le pare-soleil en une seule opération rapide ne nécessitant l'emploi que d'une seule main, ce qui constitue un progrès important par rapport aux systèmes existants.

Plus précisément, l'invention a pour objet un système de visualisation comprenant un combineur optique et un pare-soleil optique amovible, le combineur optique étant une lame optique semi-réfléchissante assurant la superposition d'une image issue du système de visualisation sur un paysage extérieur, le pare-soleil étant une lame optique mince et teintée, le pare-soleil comprenant des moyens de fixation mécaniques sur le combineur optique permettant soit de le maintenir sur le combineur optique soit de l'enlever,

**caractérisé en ce que**, le combineur optique et le pare-soleil étant de forme voisine et sensiblement rectangulaire, le combineur optique comporte sur un premier côté une première pièce mécanique et sur un second côté opposé au premier côté une seconde pièce mécanique, le pare-soleil optique comporte sur un premier côté une troisième pièce mécanique et sur un second côté opposé au premier côté une quatrième pièce mécanique en forme de clip, la troisième pièce mécanique pouvant s'enclaver dans la première pièce mécanique de façon à constituer une charnière dont l'axe de rotation est parallèle au premier côté du combineur optique, la quatrième pièce mécanique pouvant se clipser dans la seconde pièce mécanique.

Avantageusement, la première pièce mécanique comporte à chacune de ces deux extrémités une partie creuse cylindrique de révolution comportant une ouverture latérale et, la troisième pièce mécanique comporte à chacune de ces deux extrémités un axe en forme de cylindre de révolution de même diamètre que les parties creuses cylindriques de la première pièce mécanique, chaque axe de la troisième pièce mécanique comportant deux pans coupés parallèles, les deux axes de la troisième pièce mécanique sont agencés de façon à pénétrer dans l'ouverture de la partie creuse correspondante de la première pièce mécanique, puis à permettre la rotation du pare-soleil autour d'un axe de rotation parallèle au premier côté du combineur optique jusqu'à ce que la quatrième pièce mécanique se clipse dans la seconde pièce mécanique, bloquant le pare-soleil en position verrouillée.

Avantageusement, la seconde pièce mécanique comporte une rainure centrale dans laquelle vient se clipser la quatrième pièce mécanique, ladite rainure étant entourée de deux pans coupés obliques de guidage et de centrage.

L'invention sera mieux comprise et d'autres avantages apparaîtront à la lecture de la description qui va suivre donnée à titre non limitatif et grâce aux figures annexées parmi lesquelles :
La figure 1 représente une vue de face d'un combineur optique selon l'invention ;
La figure 2 représente une vue de face d'un pare-soleil optique selon l'invention adapté au combineur optique de la figure 1 ;
La figure 3 représente une vue de face d'un ensemble comprenant le combineur optique de la figure 1 muni du pare-soleil de la figure 2 ;
La figure 4 représente une vue en perspective d'une troisième pièce mécanique liée au pare-soleil;
La figure 5 représente une vue en perspective d'une première pièce mécanique liée au combineur ;
La figure 6 représente une vue en coupe du mécanisme d'assemblage de la troisième pièce mécanique dans la première pièce mécanique ;
La figure 7 représente une vue en perspective de l'assemblage, après enclipsage, de la quatrième pièce mécanique dans la seconde pièce mécanique.

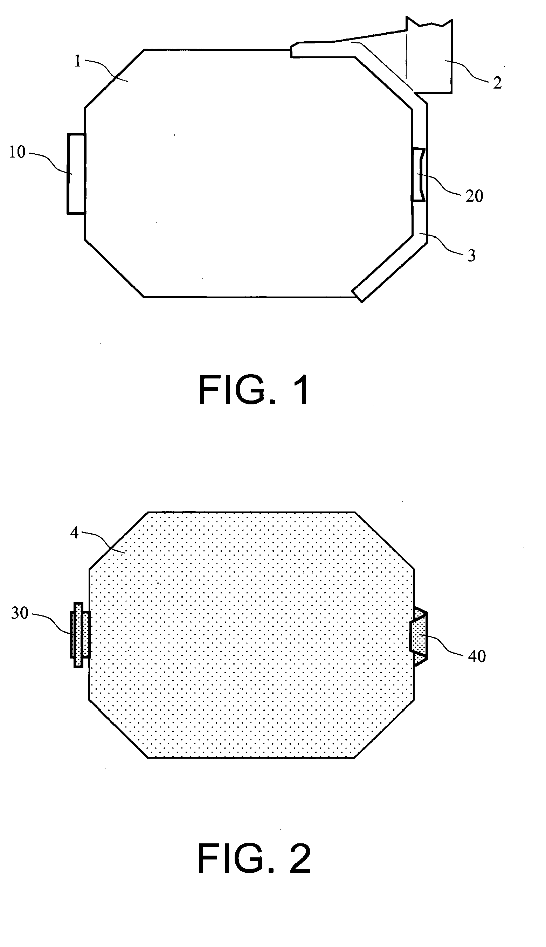

Le montage mécanique selon l'invention d'un pare-soleil amovible sur le combineur optique d'un système de visualisation tête haute comprend deux parties principales qui sont d'une part un premier ensemble de deux pièces mécaniques constituant une charnière et d'autre part un second ensemble de deux pièces mécaniques constituant un verrouillage par clipsage. Il existe de nombreuses variantes permettant de réaliser ces fonctions mécaniques. A titre d'exemple non limitatif, les figures 1 à 7 représentent un mode de réalisation mécanique possible de ces fonctions de fixation.

Comme il a été dit, un système de visualisation dit « Tête Haute » comporte essentiellement un afficheur, un système optique et un élément optique appelé combineur optique ou mélangeur optique. Généralement, l'ensemble constitué de l'afficheur et du système optique appelé aussi optique-relais est monté dans une mécanique commune et le combineur est lié à cette mécanique au moyen d'un ou de deux bras de liaison. Dans le cas d'une installation dans un cockpit d'aéronef, cet ensemble afficheur-optique-relais peut être monté soit dans le plafonnier, soit dans la planche de bord. Dans tous les cas, le combineur est placé dans le champ visuel central du pilote et il est important que les moyens de liaison mécaniques entre le combineur et le reste du système de visualisation présentent des masques visuels qui soient les plus faibles possible.

La figure 1 représente une vue de face d'un combineur optique 1 selon l'invention. Il est attaché par un bras mécanique 2 au reste du système de visualisation Tête Haute. Seule l'extrémité du bras mécanique liée au combineur est représentée sur la figure 1. Ce bras comporte un support 3 dans lequel le combineur est fixé. Le combineur 1 est généralement une lame optique de faible épaisseur plane ou courbe et de forme sensiblement rectangulaire. Sur la figure 1, les angles du rectangle sont coupés. Le combineur 1 comporte sur un premier côté une première pièce mécanique 10 et sur un second côté opposé au premier côté une seconde pièce mécanique 20. Sur la figure 1, ces pièces mécaniques de fixation du pare-soleil sont disposées sur les côtés latéraux droit et gauche du combineur. Elles pourraient l'être sur les côtés bas et haut du combineur.

La figure 2 représente une vue de face d'un pare-soleil 4 associé au combineur 1 de la figure 1. Celui-ci est une lame mince courbe, transparente et teintée. Sa forme et sa courbure sont adaptées à celles du combineur 1. Le pare-soleil 4 comporte sur un premier côté une troisième pièce mécanique 30 et sur un second côté opposé au premier côté une quatrième pièce mécanique 40.

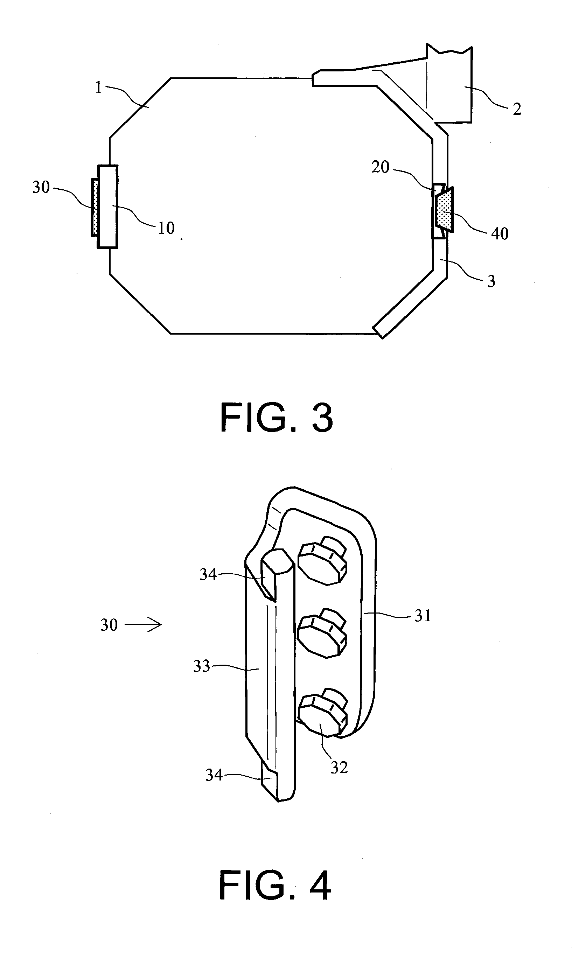

La figure 3 représente une vue de face d'un ensemble comprenant le combineur optique 1 de la figure 1 muni du pare-soleil 4 de la figure 2. La troisième pièce mécanique 30 est enclavée dans la première pièce mécanique 10 de façon à constituer une charnière dont l'axe de rotation est parallèle au premier côté du combineur optique 1, la quatrième pièce 40 mécanique est clipsée dans la seconde pièce mécanique 20.

La figure 4 représente une vue en perspective de la troisième pièce mécanique 30 liée au pare-soleil. Elle comporte essentiellement deux parties principales qui sont les suivantes :
Une première partie 31 qui lie la pièce 30 au pare-soleil 4. Sur la figure 4, à titre indicatif, la liaison est obtenue au moyen de trois plots 32.

Une seconde partie 33 comportant à son extrémité deux axes mécaniques 34 identiques disposés dans le prolongement l'un de l'autre. Chaque axe 34 est en forme de cylindre de révolution et comporte deux pans coupés parallèles entre eux.

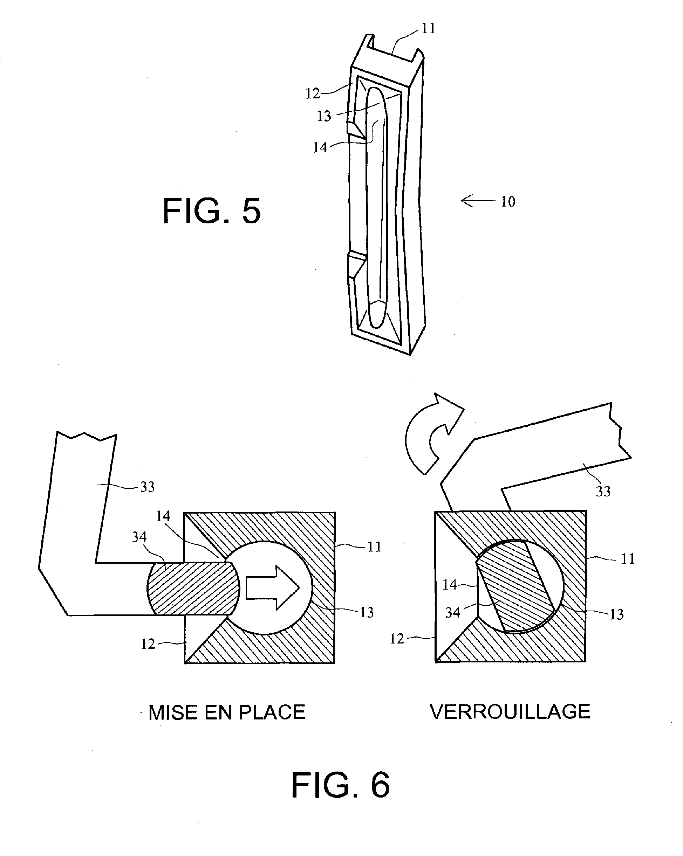

La figure 5 représente une vue en perspective de la première pièce mécanique 10 liée au combineur. Elle a la forme d'un parallélépipède. Une des faces 11 du parallélépipède est fixée sur la tranche du combineur. La face opposée 12 comporte une cavité. Chaque extrémité de cette cavité comporte une partie creuse 13 cylindrique de révolution comportant une ouverture latérale 14. Les parties cylindriques de la cavité sont sensiblement de même diamètre que les axes 34.

Lorsque l'on fixe le pare-soleil 4 sur le combineur 1, les axes 34 s'encastrent dans les parties creuses 13 de façon à permettre la rotation du pare-soleil 4 autour d'un axe de rotation parallèle au premier côté du combineur optique 1 jusqu'à ce que la quatrième pièce mécanique 40 se clipse dans la seconde pièce mécanique 20, bloquant le pare-soleil en position verrouillée, empêchant ainsi tout mouvement du pare-soleil.

La figure 6 est une vue en coupe au niveau des axes 34 et des parties creuses 13 montrant ces deux étapes de mise en place et de verrouillage. Les flèches blanches indiquent le type de mouvement effectué par l'utilisateur.

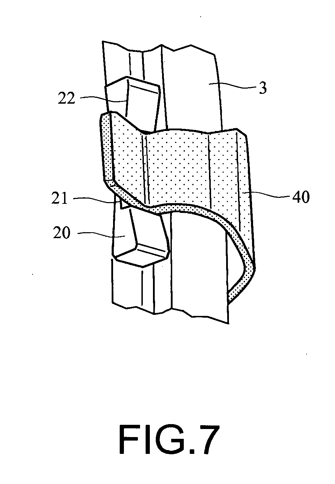

La figure 7 représente une vue en perspective de l'assemblage, après enclipsage, de la quatrième pièce mécanique 40 dans la seconde pièce mécanique 20. La seconde pièce mécanique comporte une rainure centrale 21 dans laquelle vient se clipser la quatrième pièce mécanique, ladite rainure étant entourée de deux pans coupés obliques 22 de guidage et de centrage. Cette seconde pièce mécanique permet aussi de maintenir en place le « pare-soleil » subissant une contrainte verticale quand celui-ci est fixé sur le combineur optique.

Les avantages du système de fixation selon l'invention sur les systèmes de l'art antérieur sont essentiellement la simplicité de réalisation et de montage des différentes pièces mécaniques, l'introduction d'un masque visuel réduit dans le champ de vision de l'utilisateur, la facilité de montage du pare-soleil dont la mise en place sur le combineur peut se faire d'une seule main, la grande robustesse de la fixation aux environnements vibratoires qui peuvent être sévères sur aéronef.

Cette solution permet aussi d'avoir une définition du « pare-soleil » identique pour un montage sur les lentilles relais du pilote et du copilote si ceux-ci ont une définition symétrique par rapport au plan de symétrie avion.

## Revendications

1. Système de visualisation comprenant un combineur optique (1) et un pare-soleil optique (4) amovible, le combineur optique étant une lame optique semi-réfléchissante assurant la superposition d'une image issue du système de visualisation sur un paysage extérieur, le pare-soleil étant une lame optique mince et teintée, le pare-soleil comprenant des moyens de fixation mécaniques (30, 40) sur le combineur optique permettant soit de le maintenir sur le combineur optique soit de l'enlever,
**caractérisé en ce que**, le combineur optique et le pare-soleil étant de forme voisine et sensiblement rectangulaire, le combineur optique comporte sur un premier côté une première pièce mécanique (10) et sur un second côté opposé au premier côté une seconde pièce mécanique (20), le pare-soleil optique comporte sur un premier côté une troisième pièce mécanique (30) et sur un second côté opposé au premier côté une quatrième pièce mécanique (40) en forme de clip, la troisième pièce mécanique pouvant s'enclaver dans la première pièce mécanique de façon à constituer une charnière dont l'axe de rotation est parallèle au premier côté du combineur optique, la quatrième pièce mécanique pouvant se clipser dans la seconde pièce mécanique.

2. Système de visualisation selon la revendication 1, **caractérisé en ce que** :
la première pièce mécanique (10) comporte à chacune de ces deux extrémités une partie (13) creuse cylindrique de révolution comportant une ouverture latérale (14) et,
la troisième pièce mécanique (30) comporte à chacune de ces deux extrémités un axe (34) en forme de cylindre de révolution de même diamètre que les parties creuses cylindriques de la première pièce mécanique, chaque axe de la troisième pièce mécanique comportant deux pans coupés parallèles ,
les deux axes de la troisième pièce mécanique sont agencés de façon à pénétrer dans l'ouverture de la partie creuse correspondante de la première pièce mécanique, puis à permettre la rotation du pare-soleil autour d'un axe de rotation parallèle au premier côté du combineur optique jusqu'à ce que la quatrième pièce mécanique (40) se clipse dans la seconde pièce mécanique (20), bloquant le pare-soleil en position verrouillée.

3. Système de visualisation selon la revendication 1, **caractérisé en ce que** la seconde pièce mécanique (20) comporte une rainure centrale (21) dans laquelle vient se clipser la quatrième pièce mécanique (40), ladite rainure étant entourée de deux pans (22) coupés obliques de guidage et de centrage.

## Patentansprüche

1. Anzeigesystem, das einen optischen Koppler (1) sowie eine entfernbare optische Sonnenblende (4) umfasst, wobei der optische Koppler eine teilreflektierende optische Platte ist, die die Überlagerung eines vom Anzeigesystem kommenden Bildes auf eine externe Landschaft bewirkt, wobei die Sonnenblende eine dünne und getönte optische Platte ist, wobei die Sonnenblende Mittel (30, 40) zum mechanischen Befestigen der Blende an dem optischen Koppler umfasst, so dass sie an dem optischen Koppler gehalten oder davon entfernt werden kann,
**dadurch gekennzeichnet, dass** der optische Koppler, der eine ähnliche Form hat wie die Sonnenblende und im Wesentlichen rechteckig ist, auf einer ersten Seite ein erstes mechanisches Teil (10) und auf der zweiten Seite gegenüber der ersten Seite ein zweites mechanisches Teil (20) umfasst, wobei die optische Sonnenblende auf einer ersten Seite ein drittes mechanisches Teil (30) und auf einer zweiten Seite gegenüber der ersten Seite ein viertes mechanisches Teil (40) in Form einer Klammer umfasst, wobei das dritte mechanische Teil in das erste mechanische Teil gesteckt werden kann, um ein Scharnier zu bilden, dessen Drehachse parallel zur ersten Seite des optischen Kopplers ist, wobei das vierte mechanische Teil in das zweite mechanische Teil geklemmt werden kann.

2. Anzeigesystem nach Anspruch 1, **dadurch gekennzeichnet, dass**:
das erste mechanische Teil (10) an jedem seiner beiden Enden einen hohlzylindrischen Drehteil (13) mit einer lateralen Öffnung (14) umfasst, und
das dritte mechanische Teil (30) an jedem seiner beiden Enden einen Zapfen (34) in Form eines Drehzylinders mit demselben Durchmesser wie die hohlzylindrischen Teile des ersten mechanischen Teils umfasst, wobei jeder Zapfen des dritten mechanischen Teils zwei parallele Fasen aufweist,
die beiden Zapfen des dritten mechanischen Teils so ausgelegt sind, dass sie in die Öffnung des dem ersten mechanischen Teil entsprechenden hohlen Teils eindringen und dann die Rotation der Sonnenblende um eine Drehachse parallel zur ersten Seite des optischen Kopplers zulassen, bis das vierte mechanische Teil (40) in das zweite mechanische Teil (20) geklemmt ist und die Sonnenblende in der Verriergelungsposition sperrt.

3. Anzeigesystem nach Anspruch 1, **dadurch gekennzeichnet, dass** das zweite mechanische Teil (20) eine zentrale Nut (21) aufweist, in die das vierte mechanische Teil (40) geklemmt wird, wobei die Nut von zwei abgeschrägten Führungs- und Zentrierfasen (22) umgeben ist.

## Claims

1. A display system comprising an optical combiner (1) and a removable optical visor (4), said optical combiner being a semi-reflecting optical plate providing the superposition of an image coming from the display system on an external landscape, said visor being a thin and tinted optical plate, said visor comprising means (30, 40) for mechanically fixing it to said optical combiner, allowing it either to be held on said optical combiner or to be removed,
**characterised in that**, with said optical combiner and said visor being of similar shape and substantially rectangular, said optical combiner comprises, on a first side, a first mechanical part (10) and, on a second side opposite the first side, a second mechanical part (20), said optical visor comprises, on a first side, a third mechanical part (30) and, on a second side opposite the first side, a fourth mechanical part (40) in the form of a clip, said third mechanical part being designed to fit into said first mechanical part so as to form a hinge, the axis of rotation of which is parallel to the first side of said optical combiner, said fourth mechanical part being designed to clip into said second mechanical part.

2. The display system according to claim 1, **characterised in that**:
said first mechanical part (10) comprises, at each of its two ends, a hollow rotational cylindrical part (13) comprising a lateral opening (14) and,
said third mechanical part (30) comprises, at each of its two ends, an axle (34) in the form of a rotational cylinder of the same diameter as the hollow cylindrical parts of said first mechanical part, with each axle of said third mechanical part comprising two parallel chamfers,
the two axles of said third mechanical part are arranged so as to penetrate the opening of the corresponding hollow part of said first mechanical part and then to allow the rotation of said visor about an axis of rotation parallel to the first side of said optical combiner until said fourth mechanical part (40) clips into said second mechanical part (20), blocking said visor in the locked position.

3. The display system according to claim 1, **characterised in that** said second mechanical part (20) comprises a central groove (21) into which said fourth mechanical part (40) is clipped, with said groove being surrounded by two oblique chamfers (22) for guiding and centring.
